# EUROPEAN PATENT APPLICATION

(11) **EP 0 567 420 A1**
(43) Date of publication of application: **27.10.1993**
(21) Application number: 93480027.7
(22) Date of filing: 23.03.1993
(51) Int. Cl.: G06F 12/12

(54) **Multi-bit vector for page aging**

(30) Priority: 22.04.1992 US 872732
(71) Applicant: International Business Machines Corporation, Armonk, N.Y. 10504 (US)
(72) Inventor: Parikh, Schirkant N., Mesquite, Texas 75150 (US)
(74) Representative: de Pena, Alain

(57) **Abstract**

A multi-bit SP-Vector is created to record the history of each page of a process. Each time an ager scans the accessed/not accessed bit flag of the page tables entires, the SP-Vector is updated to reflect whether or not the corresponding page was accessed. Thus depending upon the number of bits within the SP-Vector, a history of past usage is created, and pages may be selected for swapping out of physical memory based at least partially upon this history.

## Description

### Technical Field of the Invention

This invention relates in general to memory management, and in particular to a method and apparatus for improving page aging utilizing a multi-bit vector.

### Background of The Invention

In modern microprocessors, the concept of virtual memory is used in conjunction with the physical memory. Virtual memory allows a smaller amount of physical memory (which is important due to cost) to be used with large and(or multiple applications. This is possible due to the fact that only a relatively small portion of any particular application is required to be in physical memory at any one time. Therefore, in computer systems running several applications simultaneously, it is possible to place only the data and code that is needed for the currently running application in physical memory while unused data and code is either left in virtual memory or stored on a hard disk drive.

A paging based memory management uses the concept of pages, each of which typically comprise 4K (thousands of bytes) of memory address. The virtual memory causes the application to believe there is 4G (gigabytes) of memory available (for a 32 bit addressing scheme), whereas in reality there is typically anywhere from less than 1 M (megabyte) on up of physical memory (RAM). Thus it is necessary to be able to."swap" pages from physical memory to another location (ie., a disk(secondary storage).

In order to allow swapping in paging based memory management (for example, the "INTEL" Corporation 386 and 486 microprocessors, hereinafter "i386/i486"), it is typical to provide a paging system which serves to map and locate each individual page. Mapping is done by creating and maintaining page tables which list the location of each page in a page table entry (PTE). Thus, when an application requires a specific page, that page may be located by scanning through a page table. The PTE contains the address of the page as well as an accessed(not accessed flag which indicates a most recent usage.

In order to attempt to maximize the efficiency of the swapping into and out of physical memory, operating systems are provided with an ager. The purpose of an ager is to swap the least recently used pages out of physical memory when space is needed. The pages that have not been recently used will first be designated for an "idle" list and then will be swapped out as necessary. Thus, if there are pages not being used, it is more efficient to place them in storage (ie., disk) rather than take up space that may be needed in physical memory. Therefore, the ager and the paging system work in combination to keep track of the location of a page and to keep only the pages that are actually needed in physical memory.

One key determinant of a base operating system's performance is the performance of the paging based memory management, since it can directly impact the rest of the system's performance in the dimensions of working set, response time, and capacity. Thus, it is imperative that the fundamental memory management be carefully designed. In modern microprocessors, support for paging memory management is present but limited.

The efficiency of paging memory management is directly impacted by: (1) the efficiency and effectiveness of the aging, (2) correct identification of the pages which no longer belong in the working set, and (3) length of the aging cycle. By shortening the aging cycle, there will typically be a proportionate decrease in the size of the working set. For over-committed systems, it is imperative that the ager be sufficiently efficient, since the absence of such efficiency will allow the wrong pages to occupy physical memory.

In the paging based memory management architecture of some modern microprocessors such as the "i386/i486", there is a PTE corresponding to each page in memory, as previously described above. The page table entries reside in page tables. Each process has its own separate set of page tables and PTE's. Each time the contents of a page are accessed, an "accessed" flag in the PTE corresponding to that page is set by the base hardware. This flag tells the ager that the page has been accessed (ornot accessed) since the last aging service or cycle through that page table. The ager dears the flag after scanning the PTE. Typically the ager must scan all the page tables of all processes in a system to complete one full aging cycle. Periodically the ager scans all the PTEs, checks the status of the bits, and takes the appropriate actions, which could include paging out the pages which were not accessed recently. In the "i386(i486" microprocessors, support for identification of the exact page access pattern including the exact order of access is limited to the "accessed(not accessed" bit in the PTE. In the base hardware, no page time stamping is available which will tell the paging memory management sub-system the exact order of the page accesses.

It is very important that the time allocated to the ager be utilized carefully: (1) the ager should be efficient at its chosen task of identifying the next set of pages to be paged out, and (2) the ager should be accurate in identifying the pages which need to be paged out. Incorrect decisions in this regard can significantly increase erroneous page-outs, increase the physical memory requirement, and ultimately can reduce the competitiveness of the system. The central processing unit (CPU) time consumed by the ager comes at the expense of the other processes in the system and a complete aging cycle can take several CPU time slices. For efficient utilization of the resources (such as CPU time) consumed by the ager, it is important that the ager judiciously allocate these available resources to different processes.

In addition to the efficiency of the functioning of the ager, it is also important to facilitate a superior selection of the pages designated for an "idle list" which will be paged out next. Current systems utilize an approximation of a least recently used (LRU) method to swap a page out of memory. This method can often lead to incorrect decisions, especially for highly dynamic and over committed systems. As previously described above, once access flags corresponding to two physical pages are set, there is no way for the operating system to determine which page was accessed first. Additionally, once the accessed flags of two PTEs corresponding to two different pages are reset, there is no way for the operating system to determine which one was accessed last. Thus, it is entirely possible that the ager will select an incorrect page (ie., one that was more recently used) to be swapped out.

For example, while scanning PTEs, the ager may detect two PTEs with access flags reset. To the ager, this implies that after these flags were last reset, the pages were not accessed. It can designate both of these pages for the idle list (ie., a list of potential candidates to be paged out) and eventually page out both of them if they are not accessed soon enough. In other words, both pages are treated equally from the perspective of the ager. However, one page can be of a very high usage (eg., a page containing code of a high usage software) which happens to have had no access in the immediate past, while the other page could be a genuinely low usage page. The first page has a higher probability of being accessed in the future than the second page. Due to the limitations of the ager, it is possible that when a page needs to be paged out, the first page (ie., the high usage page) could be chosen, since from the limited perspective of the ager, both pages appear the same. Therefore, if the first page needs to be referenced again after being swapped out, a page fault will occur. A page fault typically causes a delay in processing time since the process being run must be halted while the page is located and swapped back into physical memory.

The accessed bit flag is set in a corresponding PTE wheneverthe page is accessed. The aging process scans the PTEs sequentially to identify the pages which have(have not been accessed and the pages not accessed are eventually designated for the idle list and may be paged out. The scanning process is inherently time consuming. Not all the PTEs in a page table need to be scanned, since only a sub-set of the pages corresponding to these PTEs will be present in physical memory. Typically, a large number of the PTEs may have to be scanned just to find an entry corresponding to a page that is present in physical memory. Essentially a very large number of entries may have to be scanned in order to locate the PTEs corresponding to the pages present in the physical memory.

Thus there is a need for a method and apparatus to more effectively manage memory in a microprocessor. In particular, a method and apparatus which achieves a more comprehensive page aging history in a paging based memory management is required.

### Summary of The Invention

The invention disclosed herein comprises a method and apparatus for utilizing a multi-bit vector for page aging which substantially eliminates or reduces some of the problems of using standard aging and paging. The method and apparatus described herein provides a more accurate history of pages in a paging based memory management system.

In accordance with one aspect of the present invention, a method of memory management in a computer system utilizing a page manager and an ager is provided. The page manager is of the type having page tables with page table entries therein for mapping and locating each page of a process. A bit vector containing a plurality of bits is established for recording a history of a number of accesses to each page table entry in each page table. When it is necessary to make room fora new page in physical memory, the vectors are evaluated to determine which page(s) should be paged out first.

A repository is created for maintaining a plurality of the vectors. The bit vectors may be established with a plurality of bits therein. The plurality of bits may comprise, for example, eight bits, sixteen bits, thirty- two bits, or etc.

It is a technical advantage of the present invention that a more detailed history of access to a page is maintained. Thus the ager will select the more appropriate pages to be swapped out when room is needed for physical memory.

### Brief Description of The Drawings

For a more complete understanding of the present invention and the advantages thereof, reference is now made to the Detailed Description in conjunction with the attached Drawings, in which:
Figure 1 is a graphical representation of the interrelationships of virtual memory, physical memory and storage;
Figure 2 is a page table and a page table entry in accordance with the prior art;
Figure 3 is a bit vector and repository constructed in accordance with the present invention;
Figure 4 is a schematic view of a data processing system in accordance with the present invention;
Figure 5 is a flow chart illustrating the ager while scanning page table entries in accordance with the present invention; and
Figure 6 is a flow chart illustrating actions of the present invention while identifying pages to be paged out.

### Detailed Description of The Invention

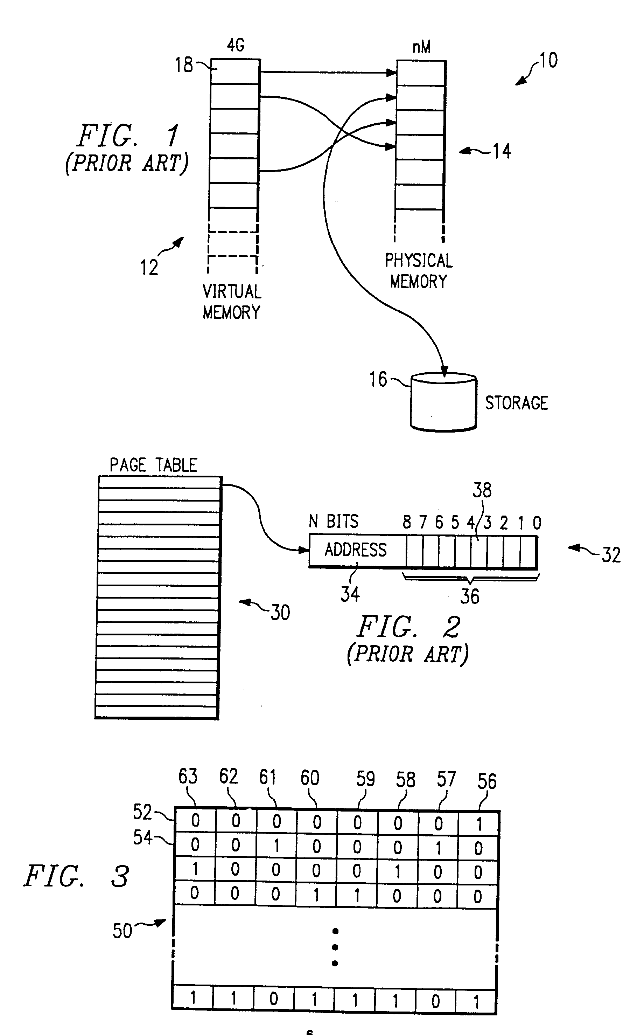

Referring first to Figure 1, a graphical representation of a memory system is generally identified by the reference numeral 10. When a computer program is written, it is written with the understanding that there is more usable memory available for addressable use than actually physically exists. Typically, four gigabytes (G) of virtual (i.e., not really existing) addressable memory 12 is provided. While the amount of physical memory (RAM) 14 varies from computer system to computer system, there is less physical memory 14 available than there is virtual memory 12. As shown in Figure 1, the memory 14 has n M(megabytes) of memory, wherein n represents a variable number typically between 1 and 64. Thus, computer hardware may be provided with a storage device 16 such as, for example, a hard disk drive for use in conjunction with the physical memory 14.

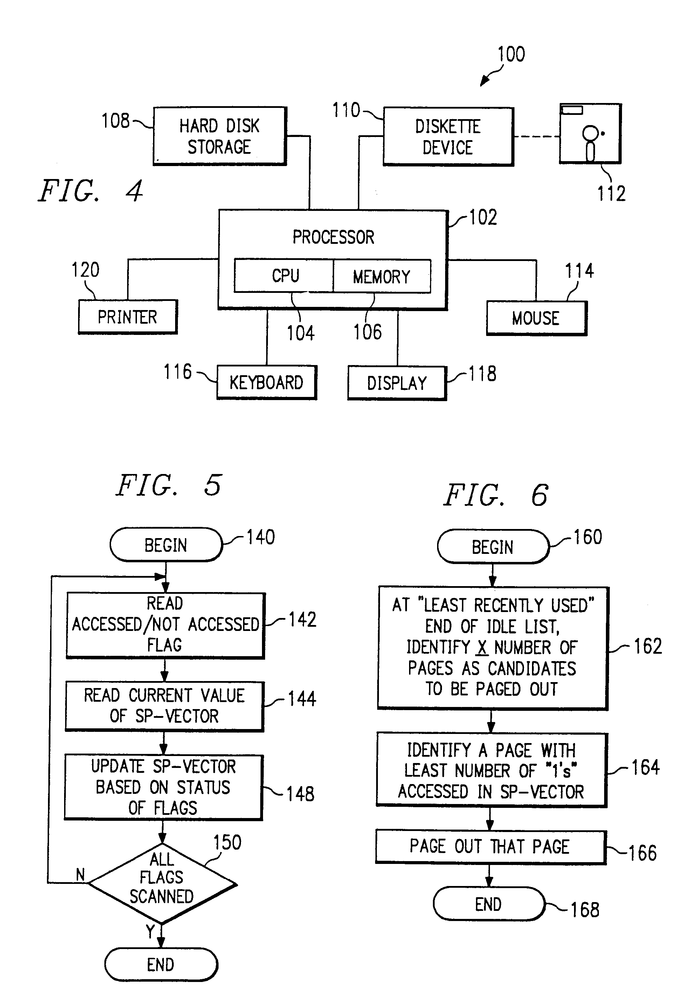

As a process (i.e., a computer program) is run on a computer system (see Fig. 5), a page (comprising 4K of data) such as indicated by the reference numeral 18 may be transferred from virtual memory 12 to physical memory 14. There is no particular order in which pages are transferred from virtual memory 12 to physical memory 14, and, therefore, sequential pages in virtual memory 12 may not be sequential pages in physical memory 14.

Once the process that is running on the computer system has used the page, a different process may require physical space in the physical memory 14. If none is available, it is necessary for a page in physical memory 14 to be "swapped" from physical memory 14 to the storage device 16. Additionally, if a process requires a page which has been placed into the storage device 16, that page must be swapped from the storage device 16 into physical memory 14.

It is the job of a paging based memory management to map and locate pages between virtual memory 12, physical memory 14 and the storage device 16. Referring to Figure 2, in "i386/i486" based microprocessors a paging based memory management typically uses a page table 30 which includes a plurality of page table entries 32. Each page table entry 32 comprises an address section 34 and a series of information bits or flags 36. The information flags 36 are used for a number of purposes such as, for example, to indicate whether or not the page is present in physical memory, whether the page is a read(write page, and etc. to include an accessed(not accessed flag, as identified by the reference numeral 38. The purpose of the flag 38 is to allow the paging based memory management to attempt to keep track of whether a page has or has not been recently used. The flag 38 is set by the base hardware ("i386/i486" chip) every time the page is accessed. In conjunction with the paging based memory management, an ager is used to assist wit h t he swapping between physical memory 14 and storage 16. The purpose of the ager is to scan the accessed/not accessed flags 38 and, when space is needed in physical memory 14, to swap the least recently used pages from physical memory 14 to the storage device 16. Due to the limited amount of information available to the ager from the single accessed/not accessed flag 38, it is possible that the ager will select the wrong page to be swapped from physical memory 14. This is possible due to the fact that once the flags 38 for different PTE's are set, the ager has no way of knowing which flag 38 was set most recently. Additionally, once the ager scans all the PTEs, the flags 38 are reset and thus, there is no way to determine which page was accessed last.

Referring next to Figure 3, one embodiment of the present invention is illustrated. An SP-Vector repository is generally identified by the reference numeral 50. The repository 50 comprises a plurality of SP-Vectors (one SP-Vector for each physical page) such as are indicated by the reference numerals 52 or 54. Each SP-Vector 52, 54 comprises a plurality of bits (as shown herein, for example only, as 8 bits) indicated by the reference numerals 56, 57, 58, 59, 60, 61, 62 and 63. Although, as shown in Figure 3, there are eight bits (flags) 56 through 63, there may be any number of bits, as desired. For example, a sixteen bit SP-Vector could be a concatenation of two eight bit vectors and each eight bit vector can be manipulated, as will be hereinafter described in greater detail. Obviously, there could be 24 bits, 32 bits and etc.

The SP-Vectors 52, 54 comprise 8 bits into which either "1" ora a "0" may be placed. For example, if the page corresponding to the SP-Vector 52 is accessed, a "1" will be placed in the right most bit, ie. in bit 56. The next time ager checks the PTE's to see if that page is accessed or not accessed, the "1" in bit 56 will move one bit to the left, ie. to bit 57. If the page was accessed since the last ager scan, another "1" will then be placed in the bit 56. If the page was not accessed, a "0" will be placed in the bit 56, and so on. In other words, a right shift occurs dropping off the left most bit each time. Thus there will be a history created for each page corresponding to each SP-Vector that spans the last eight times that ager has scanned the PTE's. Such a history provides more useful information to ager than is currently available in the prior art.

Referring next to Figure 4, there is shown, in block diagram form, a data processing system generally identified by the reference numeral 100 according to the present invention. The system 100 includes a processor 102, which includes a central processing unit (CPU) 104 and a memory 106. Additional memory, in the form of a hard disk storage 108 and a diskette device 110, is connected to the processor 102. The diskette device 110 receives a diskette 112 which has computer program code recorded thereon that implements the present invention in the system 100. The system 100 includes user interface hardware, including a mouse 114 and a keyboard 116 for allowing user input to the processor 102 and a display 118 for presenting visual data to the user. The system 100 may also include a printer 120.

Referring to Figure 5, a flow diagram illustrating the present invention during the ager scanning of page table entries is shown. The ager begins at block 140 and proceeds to read the accessed(not accessed bit flag in each page table entry at block 142. The ager then reads the current value of the SP-Vectorat block 144 corresponding to the page being checked. At block 148 the SP-Vector is updated based upon the status of the flags as determined in block 142. The ager then determines whether or not all flags have been scanned at decision block 150. If the response to decision block 150 is no, the ager returns to block 142 to further read accessed(not accessed flags. If the response to decision block 150 is yes, the ager ends for that aging cycle.

Referring to Figure 6, a flow diagram of the present invention while identifying pages to be paged out is illustrated. After beginning at block 160, "X" (a tunable parameter which may be preselected as desired) number of pages as candidates to be paged out are located on the least recently used end of the idle list. At block 164 pages with the least number of "1"s in the SP-Vector are identified. At block 166 that page (or pages) is then paged out followed by ending at block 168.

Thus, by utilizing the present invention, a more effective memory management is attained. Rather than relying on the single accessed(not accessed bit flag in each page table entry, a multi-bit vector is created to maintain a history of the usage of each page. Therefore, a more reliable status of each page is available for review prior to swapping a page from physical memory to storage. Thus, ager is more likely to swap out pages that are less frequently used resulting in fewer faults than has heretofore been possible.

Although the present invention has been particularly shown and described with reference to a preferred embodiment, it will be understood by those skilled in the art that various changes in form and detail may be made without departing from the spirit and the scope of the invention.

## Claims

1. An improved method of memory management in a computer system (100) utilizing a page manager and an ager, the page manager being of the type having at least one page table (30) and page table entries (32) therein for mapping and locating each page (14) of a process, the improvement characterized in that it comprises the steps of: establishing bit vectors (52, 54) containing a plurality of bits (56 ... 63) for recording a history of accesses in a plurality of aging cycles to each page table entry (32) in each page table (30); and evaluating said vectors (52, 54) to determine which page should be paged out first.

2. The method of Claim 1, further comprising the step of:
creating a repository (50) for containing a plurality of said vectors (52, 54).

3. The method of Claim 1 or Claim 2, wherein said step of evaluating said vectors (52, 54) includes: evaluating said numbers of accesses from said step of totalling.

4. A device for assisting a memory management in a computer system (100) utilizing a page manager including an ager, the page manager being of the type having at least one page table (30) and page table entries (32) therein for mapping and locating each page (14) of a process, characterized in that it comprises:
a bit vector (52, 54) comprising a plurality of bits (56 ... 63) for recording an accessed/not accessed history in a plurality of aging cycles of each page (14) of a process on the computer system (100) ; and

5. The device of Claim 4, further comprising:
a repository (50) for containing a plurality of said vectors (52, 54).

6. The device of Claim 5, characterised in that:
it operates under the control of a computer program product recorded on computer readable medium (112) comprising
means for creating a bit vector (52) comprising a plurality of bits (56 ... 63) for recording an accessed/not accessed history of a plurality of aging cycles of each page (14) of a process on the system; and
means for evaluating said bit vector (52) to determine which of said pages (14) should be removed from physical memory to storage.
